# EUROPÄISCHE PATENTANMELDUNG

(11) **EP 0 964 230 A2**
(43) Veröffentlichungstag der Anmeldung: **15.12.1999**
(21) Anmeldenummer: 99110107.2
(22) Anmeldetag: 25.05.1999
(51) Int. Cl.: G01K 7/18

(54) **Elektrischer Widerstand mit wenigstens zwei Anschlusskontaktfeldern auf einem Keramik-Substrat sowie Verfahren zu dessen Herstellung**

(30) Priorität: 09.06.1998 DE 19825596; 23.04.1999 DE 19918472
(71) Anmelder: Heraeus Electro-Nite International N.V., 3530 Houthalen (BE)
(72) Erfinder: Wienand, Karlheinz Dr., 63741 Aschaffenburg (DE); Sander,Margit, 63791 Karlstein (DE); Ullrich, Karlheinz Dr., 64823 Grossumstadt (DE); Dietmann, Stefan, 72221 Haiterbach (DE)
(74) Vertreter: Kühn, Hans-Christian

(57) **Zusammenfassung**

Ein elektrischer Widerstand mit einem elektrisch isolierenden Substrat weist eine in einer Ebene angeordnete Leiterbahn auf, die mit wenigstens zwei im Abstand zueinander auf dem Substrat angeordneten Sockeln elektrisch und mechanisch fest verbunden ist, wobei die Leiterbahn an ihren Enden im Sockelbereich jeweils mit Anschlußkontaktfeldern versehen ist.

Der Widerstand wird vorzugsweise als temperaturabhängiger Meßwiderstand schneller Ansprechzeit zur Messung von durchströmenden Gasmassen in der Kfz-Technik eingesetzt.

## Beschreibung

Die Erfindung betrifft einen elektrischen Widerstand, insbesondere temperaturabhängigen Meßwiderstand schneller Ansprechzeit, mit einer Leiterbahn, die mit wenigstens zwei Anschluß-Kontaktfeldern versehen ist, die auf einer elektrisch isolierenden Oberfläche eines Substrats angeordnet sind, wobei ein Teil der Leiterbahn wenigstens einen Bereich des Substrats brückenartig überspannt und wobei die Leiterbahn in einer Ebene angeordnet ist, sowie ein Verfahren zu dessen Herstellung.

Aus der EP 0 446 667 A2 ist ein Temperatursensor mit einem Substrat bekannt, das im optisch sichtbaren Wellenlängenbereich transparent ist, wobei die elektrisch leitende Schicht eine Vielzahl von mäanderförmigen Leiterbahnen in einem Meßfenster umfaßt, und wobei das Substrat vorzugsweise aus Glas oder Quarz besteht. Die Leiterbahnen bestehen vorzugsweise aus einer Schichten-Folge Chrom-Nickel-Chrom, aus Platin, aus Indiumzinnoxid, Antimonzinnoxid oder einer atomar dünnen passivierten Goldschicht.

Es handelt sich hierbei um eine kostenaufwendige Anordnung, die zudem nur in einem verhältnismäßig engen Temperaturbereich betrieben werden kann.

Aus der DE 39 27 735 A1 ist eine Temperaturmeßanordnung (Strahlungsthermometer) mit einem temperaturempfindlichen Dünnschichtwiderstand bekannt, der maänderförmig auf eine Kunststoffolie aufgebracht ist, die über eine Höhlung eines Substratmaterials gespannt ist; als Substrat ist eine Leiterplatte bzw. ein Träger aus Epoxidharz vorgesehen.

Eine solche Temperaturmeßanordnung ist aufgrund der geringen thermischen Belastbarkeit von Kunstharz nur zum Einsatz in einer Umgebung mit Temperaturen unterhalb von 200°C geeignet.

Weiterhin ist aus der DE-OS 23 02 615 ein temperaturabhängiger elektrischer Widerstand aus Widerstandsmaterial, das als dünne Schicht eine gewundene Leiterbahn bildet, die auf einer dünnen Folie aufgebracht ist, bekannt; die aus polymerem Kunststoff bestehtende Folie überspannt mit ihrer unbeschichteten Seite eine Ausnehmung in einem Trägerkörper, der beispielsweise aus Kupfer besteht, wobei die Ausnehmung die gleiche Form hat wie die Leiterbahn und in Richtung senkrecht zur Folienebene gesehen mit ihr fluchtet; es handelt sich hierbei um eine Temperatur-Meßanordnung, die einen hohen technischen Aufwand für die erforderliche präzise Überdeckung von Leiterbahn und Aussparung erfordert.

Aus der DE 30 15 356 C2 ist es bekannt, daß elektrische Schaltungen in Dickschicht-Technologie vorzugsweise auf keramischen, plättchenförmigen Substraten durch Aufdrucken von Pasten hergestellt werden, deren aktives Material aus Metallpulvern, Glas- bzw. glaskeramischen Pulvern oder aus Mischungen von Glas und Metalloxiden bestehen. Zur Herstellung von schnellansprechenden Sensoren für die Temperaturmessung werden temperaturempfindliche Dickschichtwiderstände auf freitragende Schichten aufgebracht, die mit Hilfe eines unter Temperatureinwirkung vergasbaren Füllstoffs durch Pasten-Siebdruck entstanden sind und einen später gebildeten Hohlraum abdecken. Es handelt sich hierbei um ein verhältnismäßig aufwendiges Verfahren.

Weiterhin ist aus der DE 38 29 765 A1 bzw. der US 49 06 965 ein Platin-Temperatursensor bekannt, bei dein eine Platin-Widerstandsbahn mit wenigstens zwei Enden auf einer Oberfläche wenigstens eines Keramik-Substrats aufgebracht ist; zur Herstellung wird eine Platin-Leiterbahn in Form eines Mäander-Zickzackmusters auf die innere Oberfläche eines Keramikblatts aufgetragen, und anschließend zu einer Rolle geformt, wobei auch Brüche mit Justierbrücken zwischen benachbarten Punkten des Leiterbahnmusters zwecks Justierung vorgesehen sind. Das Keramik-Substrat wird zusammen mit dem aufgetragenen Platin-Widerstand gebrannt. Der Platinwiderstand ist durch Abdichtungsmaßnahmen gegenüber der Umgebungsatmosphäre und Feuchtigkeit resistent. Zusätzlich werden nach der Einjustierung auch die hierfür erforderlichen Durchführungsöffnungen und Leitungen mittels Keramik-Beschichtung oder Glaspaste abgedichtet.

Als problematisch erweisen sich bei einer solchen Anordnung die verhältnismäßig hohe Wärmekapa-zität, welche ein rasches Ansprechen bei plötzlichen Temperaturänderungen nicht ohne weiteres ermöglicht und einen exakten Meßwert erst nach Ablauf einer Übergangsfunktion wiedergibt.

Eine weitere Ausführungsform eines Widerstandselements als schnellen Temperaturfühler ist aus der DE 38 29 195 A1 bekannt; dabei ist das Widerstandselement als Schichtwiderstand aus Platin-Paste ausgebildet, der in einer aus Glaskeramik bestehenden Blase untergebracht ist, welche auf einem elektrisch isolierenden Keramik-Substrat aufgewölbt ist.

Als problematisch ist hierbei die freitragend gewölbte Widerstandsschicht im Hinblick auf mechanische Belastungen wie z. B. Stoß, Druck oder Vibration bei Anwendungen in rauher Umgebung zu sehen.

Aus der WO 95/10770 ist weiterhin ein katalytischer Detektor für brennbare Gase bekannt, bei dem auf einem Silizium-Substrat ein Heizelement, ein Temperaturmeßelement in Form einer Widerstandsschicht und ein mit dem Meßelement gekoppeltes katalytisches Element vorgesehen ist, wobei der unterhalb der Meßstruktur befindliche Bereich des Substrats weggeätzt ist.

Aufgrund des Ätzvorganges handelt es sich hierbei um eine kostenintensive Herstellung; darüberhinaus muß die zur Temperaturmessung vorgesehene Platinschicht gegenüber dem Siliziumsubstrat durch eine Diffusionsbarriere aus SiO₂ geschützt werden.

Weiterhin ist eine rasche thermische Ansprechbarkeit des Meßwiderstandes aufgrund der massiv ausgebildeten Substrat-Flanken sehr problematisch.

Aufgabe der Erfindung ist es, gegenüber äußeren mechanischen Belastungen unempfindliche Widerstände schnellansprechender Temperatursensoren anzugeben, die sich insbesondere als Sensoren für sich rasch ändernde Temperaturen in Gasmassen im Temperatur-Bereich von -100 bis +500°C geeignet sind. Weiterhin sollen mit derartigen Temperatursensoren schnelle Gasmassenmesser mit Mikro-Strukturen aufgebaut werden, deren Reaktion im Millisekunden-Bereich liegt; darüberhinaus soll eine preisgünstige Herstellung erzielt werden.

Die Aufgabe wird anordnungsgemäß dadurch gelöst, daß die Leiterbahn mittels wenigstens zweier im Abstand zueinander angeordneter Sockel mit dem Substrat fest verbunden ist.

Als besonders vorteilhaft erweist sich die hohe Langlebigkeit des Sensors. Zudem läßt sich der Sensor verhältnismäßig einfach herstellen und weist eine geringe Größe auf

In einer bevorzugten Ausgestaltung der Erfindung besteht das Substrat aus Keramik, vorzugsweise aus Aluminiumoxid; die Sockel bestehen aus Metall, vorzugsweise aus Kupfer oder Nickel, wobei die Sockel mittels Haftvermittlerpaste und Einbrennprozeß mit der Oberfläche des Substrats mechanisch verbunden sind; die elektrische Leiterbahn ist auf einer elektrisch isolierenden plattenförmigen Membran aufgebracht, die eine Dicke im Bereich von
1-50 µm aufweist und mit dem Sockelbereich fest verbunden ist; die Membran kann aus einer Glasschicht mit einer Dicke zwischen 10 und 50 µm bestehen. Es ist jedoch auch möglich eine Membran aus einer SlO-Schicht, die im Dünnschichtverfahren aufgebracht ist, einzusetzen, die eine Dicke zwischen 1 und 10 µm -vorzugsweise 2 µm- aufweist. Die Leiterbahn ist wenigstens im Bereich zwischen den Sockeln im Form eines Mäanders aufgebracht, wobei die jeweiligen Umkehrbereiche des Mänders oberhalb der Sockel angeordnet sind, während die Zwischenstege des Mäanders eine Ausnehmung im Substrat bzw. die Oberfläche des Substrats brückenartig überspannen. Als besonders vorteilhaft erweist sich hierbei, daß die thermische Trägheit des Systems sehr klein ist und sich dadurch eine geringe Ansprechzeit im ms-Bereich ergibt.

Die Leiterbahn besteht vorzugsweise aus einer Platinschicht bzw. Pt-Folie mit einer Dicke im Bereich von 0,3 bis 3 µm, vorzugsweise 0,5 µm.

Dabei erweist sich als besonders vorteilhaft, daß aufgrund der massearmen Struktur das Sensor-Signal nahezu trägheitslos den sich rasch ändernden Meßparametern folgt.

In einer weiteren bevorzugten Ausgestaltung der erfindungemäßen Widerstandsanordnung besteht die Leiterbahn aus einer Gold-Schicht, wobei die Gold-Schicht eine Dicke im Bereich von 1 µm bis 8 µm, vorzugsweise 2 µm bis 3 µm aufweist. Die Herstellung einer strukturierten Goldschicht erweist sich als vorteilhaft, da galvanische Abscheideverfahren selbst für feine Strukturen nach verschiedenen Verfahren Stand der Technik sind.

In einer weiteren vorteilhaften Ausgestaltung der Widerstandsanordnung ist die elektrische Leiterbahn auf einer die Ausnehmung bzw. der Oberflächenbereich des Substrats wenigstens teilweise überdeckenden plattenförmigen Membran aufgebracht, wobei die Membran eine Dicke im Bereich von 1 µm bis 50 µm aufweist.

Hierbei erweist sich die erhöhte Stabilität der Leiterbahn als vorteilhaft, wie sie insbesondere bei starker mechanischer Beanspruchung - z.B. Vibration im Kraftfahrzeugmotor - gefordert sein kann.

Die Membran besteht entweder aus einer Glasschicht, die eine Dicke zwischen 10 µm und 50 µm aufweist, oder sie besteht vorzugsweise aus einer SiO oder TiO₂- oder einer Al₂O₃-Schicht (bzw. einer Kombination dieser Werkstoffe), aufgebracht in einem Dünnschicht-Verfahren, wobei sie eine Dicke zwischen 1 µm und 10 µm, vorzugsweise eine Dicke von 2 µm aufweist. Aufgrund der verhältnismaßig dünnen Membran ist vorteilhafterweise eine geringe thermische Trägheit und somit eine rasche Ansprechbarkeit gewährleistet.

In einer weiteren vorteilhaften Ausgestaltung ist die Leiterbahn auf dem Substrat mit einer Abdeckschicht aus einem elekrisch isolierenden Werkstoff versehen, die eine Dicke im Bereich von 1 µm bis 50 µm aufweist; hierdurch ist die Leiterbahn insbesondere in aggressiver Umgebung geschützt, so daß sich die Langzeit-Stabilität erhöht. Die Abdeckschicht der Leiterbahn besteht entweder aus Glas mit einer Dicke der Glasabdeckschicht im Bereich zwischen 10 µm und 50 µm oder aus einer mitteles Dünnschicht-Verfahren aufgebrachten Schicht, wobei die Abdeckschicht vorteilhafterweise aus einer SiO-Schicht besteht, die eine Dicke von 1 µm bis 10 µm, vorzugsweise eine Dicke von 2 µm aufweist.

Aufgrund der verhältnismäßig dünnen Abdeckschicht ist eine rasche Ansprechbarkeit als Temperatur-Meßwiderstand gegeben, wobei dessen Außen-Oberfläche gegen Eingriffe aus der Umgebungs-Atmosphäre geschützt ist.

Die Aufgabe wird erfindungsgemäß für ein Verfahren zur Herstellung eines Widerstandes, insbesondere Meßwiderstandes für einen schnellansprechenden Temperatursensor, auf einem Substrat mit elektrisch isolierender Oberfläche, dadurch gelöst, daß das Substrat eine Keramik-Oberfläche aufweist, die an wenigstens zwei, im Abstand zueinander angeordneten Oberflächen-Bereichen mit einer Haftvermittler-Paste selektiv bedruckt wird (Metallisierung), daß auf diese Oberflächen-Bereiche ein Sockelrohling aus Metall aufgebracht und durch Einbrennen mit dem Substrat an den Oberflächen-Bereichen mechanisch fest verbunden wird; dabei ist die dem Substrat abgewandte Seite des Sockelrohlings als Ebene ausgebildet. Sie wird mit einer ebenen Membran aus Glas im Siebdruck oder aus einer SiO-, TiO₂-, Al₂O₃-Schicht bzw. Kombination daraus im Dünnschicht-Verfahren versehen; darauf folgend wird eine Schicht für die Leiterbahn aus Platin oder Gold galvanisch oder im Dünnschicht-Verfahren (PVD-Verfahren) auf die Membran aufgebracht; nach Strukturierung der Platin- bzw. Gold-Schicht zu einer Leiterbahn nach einem bekannten Verfahren - wie z.B. Photolithographie und Ionenätzen für Platin bzw. galvanischer Aufbau für Gold - wird selektiv auf die Leiterbahn eine Passivierungsschicht aufgedruckt (Siebdruck bei Glas) oder mittels PVD-Verfahren (bei SiO) aufgebracht. Anschließend wird der Bereich der Membranschicht (einschließlich Leiterbahn und Passivierungsschicht) photolithographisch von oben abgedeckt und in einem ersten Atzschritt wird der Sockelrohling so abgeätzt, daß er die Form der Membran annimmt (d.h. Sockelbereiche über den Metallisierungsbereichen, die durch einen Steg für die Leiterbahn miteinander verbunden sind).

Für einen zweiten Ätzvorgang wird dann der sich oberhalb der Haftvermittlerbereiche bzw. der Metallisierungsbereiche befindliche Teil des Sockelrohlings über den Kantenbereich hinausgehend abgedeckt, während der zwischen den Metallisierungsbereichen befindliche stegförmige Mittelteil des Rohlings sowie der darauf befindliche Schichtenaufbau (Membran, Leiterbahn, Passivierungsschicht) freibleibt; darauffolgend wird der nichthaftende, mittlere Teil des Sockelrohlings zu einem Freiraum zwischen Membran und Oberfläche des Keramiksubstrats weggeätzt wird.

In einer bevorzugten Ausgestaltung des Verfahrens wird die Haftvermittler-Paste (Dicke ca 10 µm) im Siebdruck-Verfahren selektiv in Form von Einzelpunkten im Abstand zueinander auf die keramische Oberfläche des Substrats (Dicke der Keramik ca. 0,635mm) aufgedruckt; nach dem Aufbringen des Sockelrohlings aus Kupfer oder Nickel wird dieser durch einen Einbrennprozeß an den zwei im Abstand zueinander angeordneten Metallisierungsbereichen (Bereiche mit Haftvermittler-Paste) mit dem Substrat untrennbar verbunden. Der nichthaftende Bereich des Sockelrohlings wird dann - wie zuvor dargelegt - später weggeätzt, so daß nach dem Ätzvorgang zwei im Abstand zueinander angeordnete Sockel aus Metall (Cu oder Ni) bestehen bleiben.

In einer bevorzugten Ausgestaltung des Verfahrens wird die Membran im Siebdruck-Verfahren als Glas-Membran oder im Dünnschicht-Verfahren (Physical Vapour Deposition bzw. PVD-Verfahren) als Dünnfilm-Membran aus SiO auf die Oberfläche des Sockelrohlings aufgebracht; somit können vorteilhafterweise übliche Beschichtungstechniken eingesetzt werden; darüberhinaus wird später auch die strukturierte Abdeckschicht im Siebdruck-Verfahren als Glas oder im PVD-Verfahren als Dünnfilmschicht aus SiO auf die Leiterbahn aufgebracht.

In einer weiteren vorteilhaften Ausgestaltung des Verfahrens wird die Membranschicht in einem ersten PVD-Prozeß selektiv per metallischer Aufdampfmaske aufgedampft. Die Dicke dieser Schicht beträgt vorzugsweise 2 bis 3 µm.

Daraufhin erfolgt ganzflächig eine PVD-Pt Abscheidung in einer bevorzugten Dicke von 0,5 bis 0,6 µm, welche anschließend nach dem Stand der Technik photolithographisch zu einer Leiterbahn mit Anschlußkontakten strukturiert wird. Dann wird eine Passivierungsschicht mittels PVD-Verfahren selektiv aufgebracht, die vorzugsweise aus SiO mit einer Dicke von 2 bis 3 µm besteht. Nach den zuvor beschriebenen Ätzschritten wird der Fotolack entfernt und die Einzelteile in einer Säge für den Vereinzelungsprozeß am Schluß vorgeritzt.

Nach dem Brechen in Einzelteile werden z. B. Pt - Drähte kontaktiert und mit einer Niedertemperaturfixierung versehen. Dieses schnellansprechende Sensorbauteil ist im Temperaturbereich - 50 C ... + 220 C für einen Kupfer-Sockel bzw. bis zu 500°C für Nickel-Sockel einsetzbar.

Der erzielte Isolationswiderstand der Leiterbahnstruktur zu den tragenden metallischen Sockeln beträgt gemäß Ausführungsbeispiel 200 MOhm.

Im folgenden ist der Gegenstand der Erfindung anhand der Figuren 1 bis 6 näher erläutert.
Figur 1 zeigt schematisch in einer perspektivischen Darstellung ein Keramiksubstrat mit der selektiv aufgebrachten Haftvermittlerbeschichtung;
Figur 2 zeigt das Keramiksubstrat mit dem aufgebrachten Sockelrohling, wobei der Rohling die gesamte Oberfläche des Substrats und damit auch die beiden im Abstand zueinander angeordneten Felder der Haftvermittlerbeschichtung überdeckt;
Figur 3a zeigt den Schichtenaufbau auf dem Sockelrohling;
Figur 3b zeigt ausschnittsweise im Längsschnitt das Profil des Schichtenaufbaus;
Figur 4 zeigt die Abdeckung des Sockelrohlings im Bereich der Beschichtung (Membran, Leiterbahn, Passivierungsschicht), wobei im Mittelteil nur der Schichtenaufbau abgedeckt wird und der restliche Teil ohne Abdeckung verbleibt und somit zur Wegätzung freigegeben wird;
Figur 5 zeigt den im ersten Ätzschritt freigelegten Sockelrohling, wobei unterhalb des mittleren Teil der Leiterbahn noch eine stegförmige, massive Struktur des Rohlings vorliegt, die über den metallisierten Bereichen befindlichen Teile des Sockelrohlings werden über ihren Kantenbereich hinausgehend mit einer Siebdruckpaste für einen zweiten Ätzschritt zur Entfernung des stegförmigen mittleren Teils abgedeckt.
Figur 6 zeigt den nach dem zweiten Ätzschritt fertiggestellten Meßwiderstand in einer perspektivischen Darstellung;
Figur 7 zeigt eine Querschnittsdarstellung entlang der Fläche AA gemäß Figur 5.

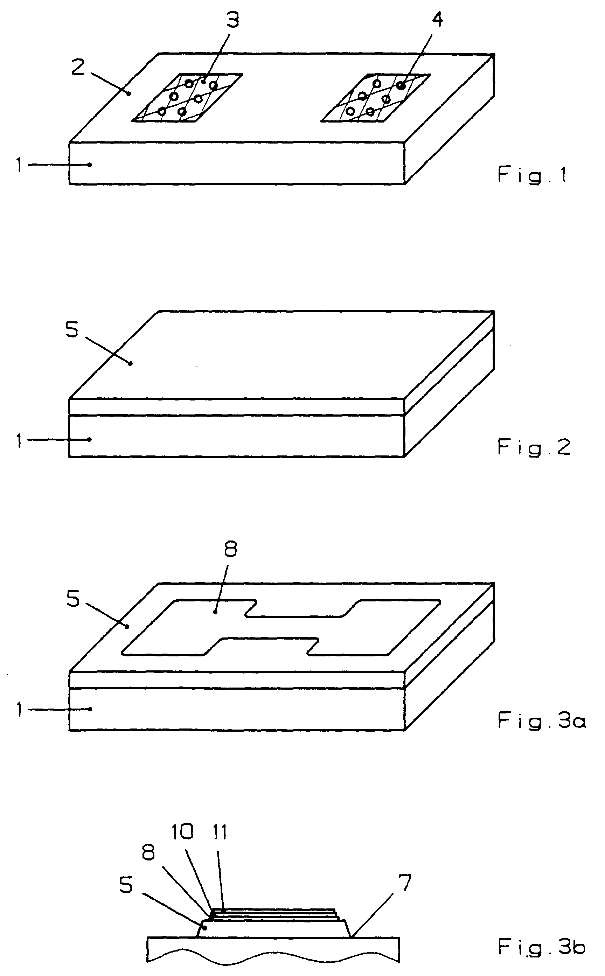

Gemäß Figur 1 weist das Keramiksubstrat 1 einen quaderförmigen Block mit ebener elektrisch isolierender Oberfläche 2 auf auf der im Abstand zueinander Bereiche 3, 4 mit Haftvermittler aufgebracht sind, deren Dicke im Bereich von 10 µm liegt. Die Dicke des - vorzugsweise aus Aluminiumoxid bestehenden - Substrats 1 liegt im Bereich von 0,6 bis 0,8 mm, vorzugsweise bie 0,635 mm. Als Haftvermittler wird für die Bereiche 3, 4 vorzugsweise CuTi-Paste aufgebracht.

Auf die Bereiche 3, 4 wird gemäß Figur 2 ein Sockelrohling 5 in Form eines Quaders ganzflächig so aufgebracht, daß die Bereiche 3, 4 ebenso wie die Oberfläche 2 von Sockelrohling 5 vollständig abgedeckt werden. Anschließend wird mit einem Einbrennvorgang im Temperaturbereich von ca. 750°C der Sockelrohling mittels Einbrennprozeß über die Metallisierungs-Bereiche 3, 4 mit Substrat 1 verbunden. Die Dicke des Substrats 1 liegt im Bereich von 0,6 bis 0,8 mm, vorzugsweise bei 0,635 mm, die Dicke des Rohlinge liegt im Bereich von 0,18 mm bis 0,22 mm, vorzugsweise bei 0,2 mm.

Gemäß Figur 3a wird auf die äußere Oberfläche 7 des Rohlings 5 in einem ersten PVD-Prozeß selektiv per metallischer Aufdampfmaske eine Membranschicht 8 aufgetragen, welche vorzugsweise aus SiO besteht; daran anschließend wird wie anhand der detaillierten Figur 3b zu erkennen ist, auf Membranschicht 8 eine Platinschicht 10 für die spätere Leiterbahn im PVD-Verfahren aufgebracht, wobei diese Schicht eine Dicke im Bereich von 0,4 bis 1,5 µm, vorzugsweise 0,5 µm aufweist. Anschließend wird die aufgebrachte Platinschicht nach dem Stand der Technik photolithografisch strukturiert, um beispielsweise das für Meßwiderstände charakteristische Mäandermuster zu erzielen. Nach der Strukturierung wird wie Figur 3b schematisch dargestellt, eine Passivierungsschicht 11 im PVD-Verfahren selektiv aufgebracht, die vorzugsweise aus SiO besteht und eine Dicke im Bereich von 2 bis 3 µm aufweist.

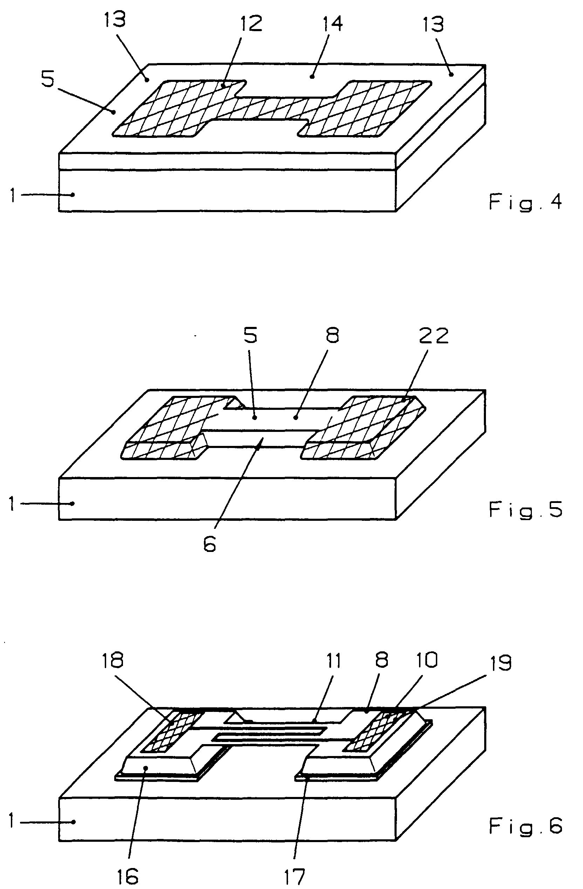

Gemäß Figur 4 wird auf den Sockelrohling 5 eine Ätzmaske 12 aus Photolack aufgetragen und photolithografisch so strukturiert, daß der Sockelrohling zusammen mit den auf seiner Oberfläche aufgebrachten Schichten in der Kontur der Membranschicht 8 abgedeckt ist, während der restliche Bereich 13 freigelassen wird; anschließend wird in einem ersten Ätzprozeß Rand- und Zwischenbereich 13, 14 so weggeätzt, so daß der aus Membran 8, Platinschicht 10 und Passivierungsschicht 11 bestehende Schichtenaufbau den Rohling überdeckt.

Gemäß Figur 5 wird der nach dem ersten Ätzschritt erhaltene Sockelrohling 5 zusammen mit den aufgebrachten Schichten 8, 10, 11 mit Ausnahme des Mittelteils 6 durch Aufbringen einer neuen Siebdruckschicht 22 über die Kantenbereiche hinaus abgedeckt, wobei in einem zweiten Ätzschritt der Zwischenmembranschicht 8 und Oberfläche des Substrats 2 befindliche Mittelteil 6 des Rohlings weggeätzt wird; es bleiben somit gemäß Figur 6 lediglich die über den Metallisierungsbereichen 3, 4 befindlichen Sockel 16, 17 übrig, zwischen denen sich der Schichtenaufbau mit den Schichten 8, 10, 11 überbrückend spannt, während auf den Sockeln 16, 17 zusätzlich, während die auf den Sockeln befindlichen Anschlußfelder 18, 19 der Leiterbahn mit Anschlußdrähten versehen werden können.

Als Ätzmittel wird sowohl im ersten als auch im zweiten Ätzschritt eine FeCl₃/HCl-Lösung eingesetzt.

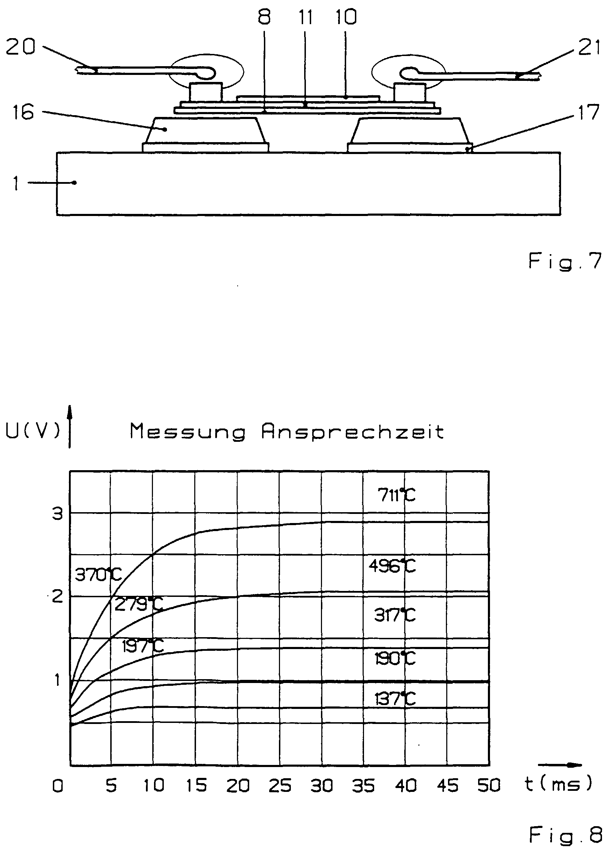

Die in Figur 6 dargestellte endgültige Form ist im Längsschnitt entlang der Ebene A-A geschnitten in Figur 7 dargestellt; Figur 7 zeigt die auf den Sockeln 16, 17 aufliegende Membranschicht 8, welche hier zur besseren Verdeutlichung im Abstand dargestellt ist; auf der Membranschicht 8 befindet sich die Platinschicht 10 weiche nunmehr als strukturierte Leiterbahn vorliegt, die im Bereich ihrer Anschlußfelder mit den Anschlußdrähten 20, 21 verbunden ist; die Leiterbahn der Platinschicht 10 ist ihrerseits wiederum durch die Passivierungsschicht 11 abgedeckt.

Figur 8 zeigt ein Spannungsdiagramm über der Zeit, mit dem das dynamische Verhalten des Meßwiderstandes bzw. der an ihm abfallenden Spannung erläutert ist.

Für die Koordinatenteilung gilt:
Y - Achse: Spannung (0,5 V / div.)
x - Achse: Zeit (% ms / div.)

Die Leiterbahn 10 besteht aus einem Pt-Mäander zwischen zwei SiO-Schichten 8, 11 (jeweils 2 µm) befindet; dabei ergeben sich folgende Fühlerdaten:
Ro = 9,17 Ohm
R100 = 12,70 Ohm
Tk = 3845 ppm/K

### Meßergebnisse:

| **I (mA)** | **U (V)** | **R (Ohm)** | **T (C)** | **t 50% (ms)** | **T 90% (ms)** |
|---|---|---|---|---|---|
| 90 | 2,87 | 31,94 | 711 | 5 | 15 |
| 80 | 2,05 | 25,63 | 496 | 5 | 15 |
| 70 | 1,41 | 20,02 | 317 | 5 | 15 |
| 60 | 0,95 | 15,81 | 190 | 5 | 15 |
| 50 | 0,7 | 14 | 137 | 5 | 15 |

## Patentansprüche

1. Elektrischer Widerstand, insbesondere temperaturabhängiger Meßwiderstand schneller Ansprechzeit, mit einer Leiterbahn, die mit wenigstens zwei Anschluß-Kontaktfeldern versehen ist, die jeweils mit einem Substrat mechanisch fest verbunden sind, das eine elektrisch isolierende Oberfläche aufweist, wobei ein Teil der Leiterbahn wenigstens einen Bereich des Substrats (1) überspannt und die Leiterbahn (10) in einer Ebene angeordnet ist, dadurch gekennzeichnet, daß die Leiterbahn (10) mittels wenigstens zweier im Abstand zueinander angeordneter Sockel (16, 17) mit dem Substrat (1) fest verbunden ist.

2. Elektrischer Widerstand nach Anspruch 1, dadurch gekennzeichnet, daß zumindest die Oberfläche des Substrats aus Keramik besteht.

3. Elektrischer Widerstand nach Anspruch 1 oder 2, dadurch gekennzeichnet, daß die Sockel (16, 17) aus Metall bestehen, die mittels metallischer Haftvermittler-Paste und Einbrennprozeß mit der Oberfläche (2) des Substrats (1) mechanisch fest verbunden sind.

4. Elektrischer Widerstand nach Anspruch 3, dadurch gekennzeichnet, daß die Sockel aus Kupfer oder Nickel bestehen.

5. Widerstand nach einem der Ansprüche 1 bis 4, dadurch gekennzeichnet, daß die elektrische Leiterbahn (10) auf einer plattenförmigen Membran (8) aufgebracht ist, wobei die Membran eine Dicke im Bereich von 1 bis 50 µm aufweist und fest mit den Sockeln (3, 4) verbunden ist.

6. Widerstand nach Anspruch 5, dadurch gekennzeichnet, daß die Membran (8) aus einer Glasschicht besteht und eine Dicke zwischen 10 und 50 µm aufweist.

7. Widerstand nach Anspruch 5, dadurch gekennzeichnet, daß die Membran (10) aus einer SiO-, TiO₂- Al₂O₃-Schicht oder einer Kombination daraus, aufgebracht in einem Dünnschicht-Verfahren, besteht und eine Dicke zwischen 1 und 10 µm, vorzugsweise eine Dicke von 2 µm, aufweist.

8. Widerstand nach einem der Ansprüche 1 bis 7, dadurch gekennzeichnet, daß die Leiterbahn (4) wenigstens im Bereich zwischen den Sockeln in Form eines Mäanders ausgebildet ist, wobei die jeweiligen Umkehrbereiche des Mäanders im Bereich oberhalb der Sockel angeordnet sind, während die Zwischenstege des Mäanders die Ausnehmung brückenartig überspannen.

9. Widerstand nach einem der Ansprüche 1 bis 8, dadurch gekennzeichnet, daß die Leiterbahn (4) aus einer Platinschicht/Pt-Folie besteht.

10. Widerstand nach Anspruch 9, dadurch gekennzeichnet, daß die Platinschicht/Pt-Folie eine Dicke im Bereich von 0,3 bis 1,5 µm, vorzugsweise 0,5 µm, aufweist.

11. Widerstand nach einem der Ansprüche 1 bis 10, dadurch gekennzeichnet, daß die Leiterbahn (4) aus einer Gold-Schicht besteht.

12. Widerstand nach Anspruch 11, dadurch gekennzeichnet, daß die Gold-Schicht eine Dicke im Bereich von 1 bis 8 µm, vorzugsweise 2 bis 3 µm aufweist.

13. Widerstand nach einem der Ansprüche 1 bis 12, dadurch gekennzeichnet, daß die Leiterbahn (10) mit einer Passivierungsschicht (11) aus einem elektrisch isolierenden Werkstoff versehen ist, die eine Dicke im Bereich von 1 bis 50 µm aufweist.

14. Widerstand nach Anspruch 13, dadurch gekennzeichnet, daß die Passivierungsschicht (11) aus Glas besteht.

15. Widerstand nach Anspruch 14, dadurch gekennzeichnet, daß die Dicke der Passivierungsachicht (11) im Bereich zwischen 10 und 50 µm liegt.

16. Widerstand nach Anspruch 13, dadurch gekennzeichnet, daß die Passivierungsschicht (11) aus einer mittels eines Dünnschicht-Verfahren aufgebrachten Schicht besteht.

17. Widerstand nach Anspruch 16, dadurch gekennzeichnet, daß die Passivierungsschicht (11) aus einer SiO-Schicht besteht und diese eine Dicke von 1 bis 10 µm, vorzugsweise eine Dicke von 2 µm, aufweist.

18. Widerstand nach einem der Ansprüche 1 bis 17, dadurch gekennzeichnet, daß das Substrat zwischen den Sockeln (16, 17) zur Aufbringung des Haftvermittlers eine Ausnehmung aufweist, welche von der Membran (8) überbrückt ist.

19. Verfahren zur Herstellung eines Widerstandes, insbesondere Meßwiderstandes für einen schnellansprechenden Temperatursensor auf einem Substrat mit elektrisch isolierender Oberfläche, dadurch gekennzeichnet, daß das Substrat (1) eine Keramik-Oberfläche (2) aufweist, die an wenigstens zwei, im Abstand zueinander angeordneter Oberflächen-Bereichen (3, 4) mit einer Haftvermittler-Paste bedruckt wird, daß auf diese Oberflächen-Bereiche (3, 4) ein diese Bereiche überdeckender Sockelrohling aus Metall aufgebracht und durch Einbrennen mit dem Substrat (1) an den Oberflächen-Bereichen (3, 4) mechanisch fest verbunden wird, daß die dem Substrat (1) abgewandte Seite des Sockelrohlings (5) als Ebene ausgebildet mit einer ebenen Membranschicht (8) im Siebdruck oder im Dünnschicht-Verfahren auf der Oberfläche des Sockelrohlings versehen wird, daß darauf folgend eine Leiterbahn-Schicht (10) aus Platin im Dünnschicht-Verfahren oder aus Gold galvanisch auf die Membran (8) aufgebracht wird und daß nach Strukturierung der Schicht (10) zu einer Leiterbahn mit Anschlußkontaktfeldern diese Schicht mit einer elektrisch isolierenden Passivierungsschicht (11) abgedeckt wird, daß anschließend der aus Schichten (8, 10, 11) bestehende Aufbau in der Kontur der Membranschicht (8) photolithographisch von oben abgedeckt wird und in einem ersten Ätzschnitt der Sockelrohling abgeätzt wird und daß für einen zweiten Ätzvorgang der anschließend der zwischen Leiterplatte und Substrat befindliche, durch den Einbrennvorgang gebildete Verbindungs-Bereich des Sockelrohlings von der Substrat-Oberfläche bis zur Membran mit Siebdruckpaste abdeckt und anschließend der nichthaftende, mittlere Teil des Sockelrohlings zu einem Freiraum zwischen Membran und Keramik weggeätzt wird.

20. Verfahren nach Anspruch 19, dadurch gekennzeichnet, daß die Membran (8) im Siebdruck-Verfahren als Glas-Membran oder im Dünnschicht-Verfahren als Dünnfilm-Membran aus SiO auf die Oberfläche des Substrats aufgebracht wird.

21. Verfahren nach einem der Ansprüche 18 bis 20, dadurch gekennzeichnet, daß eine strukturierte Abdeckschicht (11) im Siebdruck-Verfahren als Glas oder im Dünnschicht-Verfahren als Dünnfilmschicht aus SiO auf die Leiterbahn (4) aufgebracht wird.

22. Verfahren nach einem der Ansprüche 18 bis 21, dadurch gekennzeichnet, daß die Leiterbahn (4) im Dünnschicht-Verfahren aufgebracht wird und mittels Fotolithografie, Ionenätzen und Entfernung von Photolack strukturiert wird.

23. Verfahren nach einem der Ansprüche 18 bis 21, dadurch gekennzeichnet, daß die Leiterbahn (4) auf einer vorher aufgebrachten Metallelektrode galvanisch in einem Resistkanal abgeschieden wird und die Metallelektrode am Schluß chemisch oder per Trockenätzverfahren entfernt wird.

24. Verfahren nach einem der Ansprüche 18 bis 21, dadurch gekennzeichnet, daß die Leiterbahn (4) in einem fotolithografisch erzeugten Resistkanal durch ein PVD-Verfahren abgeschieden wird und der Photolack anschließend entfernt wird.
